# EUROPÄISCHE PATENTANMELDUNG

(11) **EP 3 382 862 A1**
(43) Veröffentlichungstag der Anmeldung: **03.10.2018**
(21) Anmeldenummer: 17163842.2
(22) Anmeldetag: 30.03.2017
(51) Int. Cl.: H02K 7/18, H02K 16/00, B60L 11/00, H02K 7/00, H02K 5/16

(54) **FAHRZEUG MIT DIESELELEKTRISCHER ENERGIEERZEUGUNG**

(71) Anmelder: Siemens Aktiengesellschaft, 80333 München (DE)
(72) Erfinder: Körner, Olaf, 90469 Nürnberg (DE)

(57) **Zusammenfassung**

Die Erfindung betrifft ein Fahrzeug mit dieselelektrischer Energieerzeugung für zumindest einen Fahrmotor und zumindest einem Hilfsbetrieb (21) wobei die elektrische Energieerzeugung des Fahrmotors über einen Hauptgenerator (1) erfolgt und die elektrische Energieerzeugung der Hilfsbetriebe (21) über einen Hilfsbetriebsgenerator (13) erfolgt, die galvanisch voneinander getrennt und mechanisch gekoppelt sind, und wobei der Hilfsbetriebsgenerator (13) auf der dem Dieselaggregat (19) abgewandten Seite des Hauptgenerators (1) angeordnet ist.

## Beschreibung

Die Erfindung betrifft ein Fahrzeug mit einer dieselelektrischen Energieerzeugung für zumindest einen Fahrmotor und zumindest einen Hilfsbetrieb.

Fahrzeuge mit dieselelektrischer Energieerzeugung weisen einen Generator zur Energieerzeugung auf, der einen Zwischenkreis eines Umrichters versorgt, wobei über den Zwischenkreis, über dreiphasige Hilfsbetriebsumrichter und Transformatoren zur Potentialtrennung elektrische Energie für die Hilfsbetriebe, wie Lüfter, Klimaanlagen etc. bereitgestellt wird.

So ist beispielsweise aus der Zeitschrift "Eisenbahnkurier" EK-Verlag 2007 über den Euro-Runner ein Hilfsbetriebsumrichter bekannt, der aus dem Zwischenkreis des Traktionsumrichters mitversorgt wird, wobei die Spannung durch Tiefsetzsteller auf eine geeignete Eingangsspannung gebracht wird.

Des Weiteren sind aus der DE 10 2007 045 314 A1 zusätzliche Hilfsbetriebewicklungen in den Nuten des Hauptgenerators bekannt.

Nachteilig dabei ist, dass zum einen die abgezweigte Energie den Traktionsmotoren nicht mehr zur Verfügung steht und des Weiteren die elektrische Auslegung des Hauptgenerators erschwert wird.

Ausgehend davon liegt der Erfindung die Aufgabe zugrunde, ein Fahrzeug mit dieselelektrischer Energieerzeugung bereitzustellen, bei dem die Hilfsbetriebe in einfacher Art und Weise elektrisch versorgt werden.

Die Lösung der gestellten Aufgabe gelingt dadurch, dass die elektrische Energieerzeugung des Fahrmotors über einen Hauptgenerator erfolgt und die elektrische Energieerzeugung der Hilfsbetriebe über einen Hilfsbetriebsgenerator erfolgt, wobei Hauptgenerator und Hilfsbetriebsgenerator galvanisch voneinander getrennt und mechanisch gekoppelt sind, und wobei der Hilfsbetriebsgenerator auf der dem Dieselaggregat abgewandten Seite des Hauptgenerators angeordnet ist.

Durch die erfindungsgemäße Integration eines separaten Hilfsbetriebsgenerators, insbesondere in einen Hauptgenerator auf der dem Antrieb abgewandten Seite, also auf der dem Verbrennungsmotor abgewandten Seite, wird vorzugsweise eine einfache und für die Wartung zugängliche Anordnung geschaffen, die zusätzlich kompakt ausgeführt ist. Vorzugsweise wird der Hilfsbetriebsgenerator auf dieser Seite als Außenläufer ausgeführt.

Der Außenläufer ist dabei in einem topfähnlichen Gebilde angeordnet, das einen direkten mechanischen Kontakt zu einem Fortsatz einer Welle aufweist.

Als Hilfsbetriebsgenerator wird eine höherpolige (> 8Pole) permanenterregte Synchronmaschine eingesetzt. Der Stator des Hilfsbetriebsgenerators ist mit Zahnspulen versehen, so dass ein einfacher Aufbau des Hilfsbetriebsgenerators erreicht wird. Die Permanentmagnete sind auf der Innenseite des topfähnlich ausgebildeten Gebildes platziert, das mit der Welle drehfest in Verbindung steht. Um einen kompakten Aufbau des gesamten Systems von Verbrennungsaggregat, insbesondere Dieselaggregats, Hauptgenerator und Hilfsbetriebsgenerator zu erreichen, wird der Hilfsbetriebsgenerator direkt mit der Welle über einen Wellenfortsatz mechanisch gekoppelt.

Denkbar sind auch Anordnungen den Hilfsbetriebsgenerator über ein Getriebe, ein Planetengetriebe, einen Keilriemen oder einer Gelenkwelle mit der Welle mechanisch zu koppeln.

Der Hilfsbetriebsgenerator weist somit einen Stator auf, der über eine geeignete Halterung, die sich am Gehäuse, einem Gehäuseabschnitt des Hauptgenerators und/oder einem Lagerschildes abstützt, positioniert und fixiert ist. Diese Halterung weist Ausnehmungen auf, die eine Kühlung des Hilfsbetriebsgenerators gestatten.

Bei einem Innenstator - also wenn der Rotor als Außenläufer ausgebildet ist - stützt sich diese Halterung optional über ein Lager auf der Welle ab.

Die Kühlung des Hilfsbetriebsgenerators erfolgt bei einem fremdbelüfteten Hauptgenerator über einen Teilmassenluftstrom, der beispielsweise von einem B-seitigen einströmenden Kühlluftstrom abgezweigt wird.

Bei einer eigenbelüfteten Variante des Hauptgenerators kann der Hilfsbetriebsgenerator direkt oder zum Teil im Kühlluftstrom angeordnet sein, der B-seitig vorzugsweise axial in den Hauptgenerator einströmt.

Um eine zusätzliche Kühlung des Hilfsbetriebsgenerators zu erhalten, sind sowohl an der Halterung im Bereich des Stators des Hilfsbetriebsgenerators und/oder an der Halterung selbst, Rippen vorgesehen, um eine Oberflächenvergrößerung zu erhalten, die bei Luftkühlung den Kühleffekt verbessert.

Auch das topfähnliche Gebilde kann Rippen oder lüfterähnliche Gestaltungen aufweisen, um im Betrieb auch eine Luftzirkulation innerhalb des topfähnlichen Gebildes und/oder des Hauptgenerators zu erhalten.

Der Rotor des Hilfsbetriebsgenerators, dessen Aktivteil vorzugsweise Permanentmagnete sind, ist über eine topfähnliche Ausgestaltung mit der Welle direkt gekoppelt. Je nach Anordnung der Permanentmagnete, innerhalb der Topfwände, sind Halbachanordnungen oder auch klassische Anordnungen vorgesehen, wobei bei einer klassischen Anordnung ein zusätzliches magnetflussführendes Element zwischen der Topfinnenseite und den Permanentmagneten sinnvoll ist. Unter einer klassischen Anordnung wird dabei eine Magnetanordnung verstanden, bei der die Pole der Magneten auf gegenüberliegenden Seiten der Magneten angeordnet sind, und so bei jedem Magneten Nord- oder Südpol zum Luftspalt der dynamoelektrischen Maschine weisen.

Durch die erfindungsgemäße Ausgestaltung der elektrischen Energieerzeugung des Fahrzeugs ist somit nunmehr keine aufwändige Zusatzwicklung für Hilfsbetriebsleistungen in den Nuten des Hauptgenerators notwendig. Es sind somit keine Kompromisse bei der Auslegung des Hauptgenerators, also des Traktionsgenerators, wie beim Stand der Technik erforderlich, der aufgrund der Zusatzwicklung in den Nuten lediglich eine verringert mögliche Traktionsleistung bereitstellen könnte.

Damit wird die verfügbare vom Hauptgenerator bereitgestellt Traktionsleistung um ca. 5% gesteigert.

Der Hilfsbetriebsgenerator kann durch den erfindungsgemäßen Aufbau bei Hauptgeneratoren eingesetzt werden, die als Asynchrongeneratoren, PM-Generatoren oder elektrisch erregte Generatoren ausgeführt sind.

Die Erfindung sowie vorteilhafte Ausgestaltungen der Erfindung sind den Ausführungsbeispielen zu entnehmen. Darin zeigen:
- FIG 1: einen Längsschnitt eines Hauptgenerators mit Hilfsbetriebsgenerator,
- FIG 2: einen Hilfsbetriebsgenerator,
- FIG 3: einen Längsschnitt eines Hauptgenerators mit einem weiteren Hilfsbetriebsgenerator
- FIG 4: ein elektrisches Prinzipschaltbild.

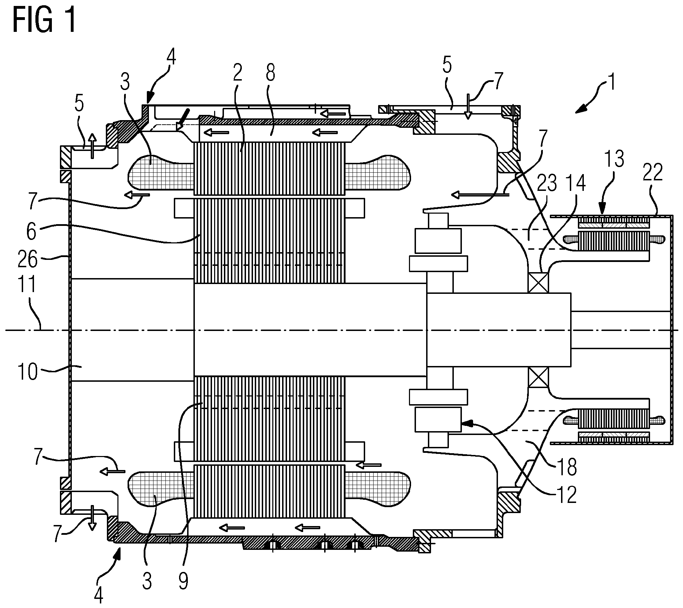

FIG 1 zeigt in prinzipieller Darstellung einen Längsschnitt eines Hauptgenerators 1 und des Hilfsbetriebsgenerators 13. Sowohl Hilfsbetriebsgenerator 13, als auch Hauptgenerator 1 sind auf einer Welle 10 angeordnet und werden von dieser Welle 10 angetrieben. Die Welle 10 wird dabei von einem Dieselaggregat 19, das auch ein anderes Verbrennungsaggregat sein kann, in diesem Fall über eine Membrankupplung 26 angetrieben. D.h. es liegt in diesem Fall eine direkte mechanische Kopplung zwischen den Rotoren 6, 16 von Hauptgenerator 1 und Hilfsbetriebsgenerator 13 vor.

Sowohl die Rotoren 6, 16 von Hauptgenerator 1 und Hilfsbetriebsgenerator 13 drehen sich um eine gemeinsame Achse 11.

Der Hauptgenerator 1 weist einen Stator 2 auf, der axiale Kühlkanäle 8 in seinem Gehäuse 4 und/oder seinem Blechpaket aufweist. In nicht näher dargestellten Nuten des Stators 2 ist ein Wicklungssystem, das an den Stirnseiten des Stators 2 jeweils einen Wickelkopf 3 ausbildet. Als Wicklungssystem dieses Stators 2 können Schleifenwicklungen, Zahnspulenwicklungen als auch geschichtete gesehnte Wicklungen vorgesehen sein.

Der Rotor 6 des Hauptgenerators 1 kann ein Asynchronkäfigläufer, ein elektrisch erregter Rotor 6 oder ein permanenterregter Rotor 6 sein.

Axial vom Hauptgenerator 1 beabstandet und auf der gleichen Seite auf der sich auch der Hilfsbetriebsgenerator 13 befindet, ist im vorliegenden Fall eine Erregermaschine 12 mit rotierenden Diodengleichrichtern, die eine elektrische Erregung des Rotor 6 bereitstellen.

Lösungen mit Schleifringsystemen oder anderen Erregungsarten des Hauptgenerators 1 sind ebenso denkbar.

Des Weiteren ist auf dieser Seite des Hauptgenerators 1 der Hilfsbetriebsgenerator 13 angeordnet. Der Hauptgenerator 1 und dessen Gehäuse 4 weisen verschiedene Luftaustauschöffnungen 5 auf, die eine Luft-Luftkühlung bzw. je nach konstruktiver Gestaltung des Gehäuses 4 auch einen durchzugsbelüfteten Hauptgenerator 1 bilden. Des Weiteren sind im Rotor 6 axial verlaufene Kühlkanäle 9 vorgesehen, die auch die Kühlung des Rotors 6 des Hauptgenerators 1 gestatten.

Der Hauptgenerator 1 kann fremdbelüftet oder eigenbelüftet ausgeführt sein.

Vorteilhafterweise ist der Hilfsbetriebsgenerator 13 im Bereich eines Kühlluftstroms 7 oder eines Teils des Kühlluftstroms angeordnet. Vor allem bei einem eigenbelüfteten Hauptgenerator 1 wird eine Kühlung des Hilfsbetriebsgenerators 13, insbesondere des Stators 17 und des Rotors 16 gewährleistet, wenn dieser in axialer Verlängerung des generierten Kühlluftstroms oder zumindest in einem Teilluftstrom angeordnet ist.

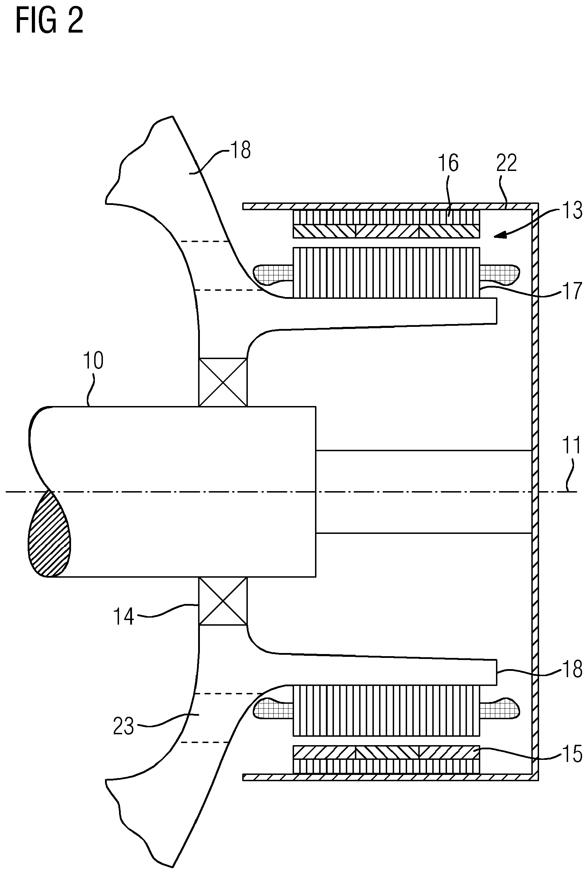

Der Hilfsbetriebsgenerator 13 wird, wie in FIG 2 näher dargestellt, durch eine Halterung 18 am Gehäuse 4 des Hauptgenerators 1 oder einem Lagerschild oder einer Lagereinheit auf der B-Seite gehalten. Der Stator 17 des Hilfsbetriebsgenerators 13 weist Zahnspulen auf. Der Rotor 16 des Hilfsbetriebsgenerators 13, der als Außenläufer ausgeführt ist, weist Permanentmagnete 15 auf, die an der Mantelseite der Innenseite eines topfähnlichen Gebildes 22 angeordnet sind.

Das topfähnliche Gebilde 22 wird auch als Rotorglocke bezeichnet und ist B-seitig - also auf der dem Dieselaggregat 19 abgewandten Seite des Hauptgenerators 1 - mit der Welle 10 verbunden, optional kombiniert mit einer BS-Kupplung für einen Wellendurchtrieb. Darüber können andere Verbraucher des Fahrzeugs, wie z.B. Hydraulikpumpen, angetrieben werden. Diese anderen Verbraucher sind mechanisch über eine Gelenkwelle 24 an die BS-Kupplung gekoppelt.

Vorteilhaft kann bei dem als Außenläufer ausgeführten Hilfsbetriebsgenerator 13 der rotierende Gleichrichter der Erregermaschine 12 in der Rotorglocke, z.B. radial innerhalb der Halterung des Stators 17 angeordnet werden. Dies verbessert die Zugänglichkeit des rotierenden Gleichrichters und verkürzt den axialen Bauraum der Erregermaschine 12, insbesondere innerhalb des Lagerschildes, so dass die Einheit aus Hauptgenerator 1 und Hilfsbetriebsgenerator sehr kompakt und platzsparend innerhalb des Fahrzeugs ausgeführt werden kann.

Dabei sind die Permanentmagnete 15 über eine Halbachanordnung direkt auf der Innenseite oder über magnetfeldführende Elemente, z.B. einem Blechpaket an der Innenseite des topfähnlichen Gebildes befestigt. Die Permanentmagnete 15 sind dabei entweder an der Oberfläche der magnetfeldführenden Elemente oder in diesen magnetfeldführenden Elementen als vergrabene Magnete angeordnet.

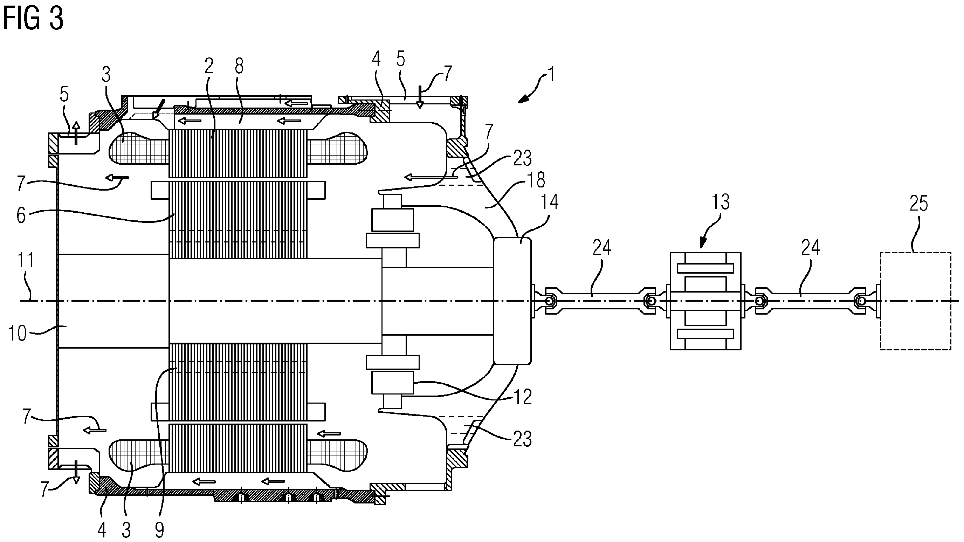

FIG 3 zeigt in einer weiteren Ausführung den Hauptgenerator 1 in dessen axialer Verlängerung auf der B-Seite, also auf der dem Dieselaggregat 19 abgewandten Seite, der Hilfsbetriebsgenerators 13 angeordnet ist. Die Welle 10 des Hauptgenerators 1 wird von dem Dieselaggregat 19 über eine Membrankupplung 26 angetrieben. Der Hilfsbetriebsgenerator 13 ist dabei über eine Gelenkwelle 24 mit der Welle 10 des Hauptgenerators 1 mechanisch verbunden. Über die Gelenkwelle 24, die auch einen axialen Versatz der von Hauptgenerator 1 und Hilfsbetriebsgenerator 13 ausgleichen kann, wird der Rotor 16 des Hilfsbetriebsgenerators 13, in diesem Fall als Innenläufer ausgeführt, angetrieben.

Der Hilfsbetriebsgenerator 13 ist im vorliegenden Fall als Innenläufer ausgeführt, benötigt eine eigene Lagerung und Halterung, unterscheidet sich aber ansonsten im Wesentlichen nicht von Stator 17 und Rotor 16 der Außenläuferausführung (z.B. Zahnspulen, Permanentmagnetanordnungen, wie oben beschrieben).

In weiterer axialer Verlängerung der Welle 10 bzw. Gelenkwelle 24 kann über eine weitere Gelenkwelle 24 ein zusätzliches Hilfsaggregat direkt angetrieben werden. Dies kann beispielsweise eine Hydraulikpumpe 25 sein.

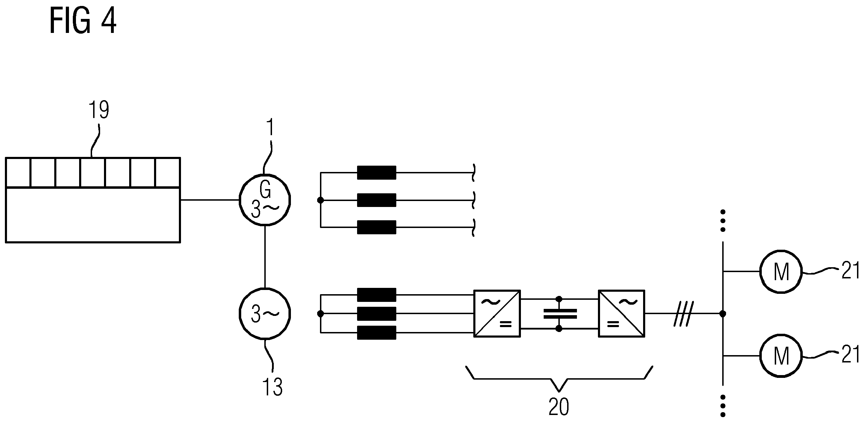

Gemäß FIG 4 tritt nunmehr bei elektrischer Energieerzeugung über den Hilfsbetriebsgenerator 13 eine Entlastung des Hauptgenerators 1 ein, so dass die zusätzliche erzeugte Energie der Traktionsleistung, insbesondere dem oder den Fahrmotoren zur Verfügung steht.

Eine derartige Anordnung eines Hilfsbetriebsgenerators 13 ist für große dieselelektrische Fahrzeuge, wie für Loks oder Mining Trucks (z.B. Muldenkipper im Tagebau) geeignet.

## Patentansprüche

1. Fahrzeug mit dieselelektrischer Energieerzeugung mittels eines Dieselaggregats (19) für zumindest einen Fahrmotor und zumindest einem Hilfsbetrieb (21), **dadurch gekennzeichnet, dass** die elektrische Energieerzeugung des Fahrmotors über einen Hauptgenerator (1) erfolgt und die elektrische Energieerzeugung des Hilfsbetriebes (21) über einen Hilfsbetriebsgenerator (13) erfolgt, wobei Hauptgenerator (1) und Hilfsbetriebsgenerator (13) galvanisch voneinander getrennt und mechanisch gekoppelt sind, und wobei der Hilfsbetriebsgenerator (13) auf der dem Dieselaggregat (19) abgewandten Seite des Hauptgenerators (1) angeordnet ist.

2. Fahrzeug nach Anspruch 1, **dadurch gekennzeichnet, dass** eine mechanische Kupplung über ein Getriebe, einen Keilriemen, eine Gelenkwelle (24) oder direkt über die gleiche Welle (10) des Hauptgenerators (1) erfolgt, wobei der Hilfsbetriebsgenerator (13) an einem axialen Fortsatz der Welle (10) angeordnet ist.

3. Fahrzeug nach Anspruch 1 oder 2, **dadurch gekennzeichnet, dass** der Hilfsbetriebsgenerator (13) an einem axialen Fortsatz der Welle (10) angeordnet ist.

4. Fahrzeug nach einem der vorhergehenden Ansprüche, **dadurch gekennzeichnet, dass** ein Rotor (16) des Hilfsbetriebsgenerators (13) als Außenläufer ausgeführt ist.

5. Fahrzeug nach einem der vorhergehenden Ansprüche, **dadurch gekennzeichnet, dass** der Stator (17) des Hilfsbetriebsgenerators (13) Zahnspulen aufweist.

6. Fahrzeug nach einem der vorhergehenden Ansprüche, **dadurch gekennzeichnet, dass** der Rotor (16) des Hilfsbetriebsgenerators (13), der als Außenläufer ausgeführt ist, Permanentmagnete (15) aufweist, die an einem topfähnlichen Gebilde (22) angeordnet sind.

7. Fahrzeug nach einem der vorhergehenden Ansprüche, **dadurch gekennzeichnet, dass** der Stator (17) des Hilfsbetriebsgenerators (13) durch eine Halterung (18) im Lagerschild oder in einem Gehäuse (4) des Hauptgenerators (1) gehalten ist.

8. Fahrzeug nach einem der vorhergehenden Ansprüche, **dadurch gekennzeichnet, dass** ein Kühlluftstrom (7) des Hauptgenerators (1) zumindest zum Teil den Hilfsbetriebsgenerator (13) über Ausnehmungen (23) in der Halterung (18) mitkühlt.
